# EUROPEAN PATENT SPECIFICATION

(11) **EP 1 893 063 B1**
(45) Date of publication and mention of the grant of the patent: **04.05.2011**
(21) Application number: 06739873.5
(22) Date of filing: 29.03.2006
(51) Int. Cl.: A47J 31/00, A47J 31/41

(54) **COFFEE AND TEA DISPENSER**
KAFFEE- UND TEEABGABEVORRICHTUNG
DISTRIBUTEUR DE CAFE ET DE THE

(30) Priority: 09.05.2005 US 908356
(43) Date of publication of application: 05.03.2008
(73) Proprietor: The Coca-Cola Company, Atlanta, GA 30313 (US)
(72) Inventor: GREEN, Charles Bradley, Dacula, Georgia 30019 (US); PHILLIPS, Paul, A., Marietta, Georgia 30064 (US)
(74) Representative: Taylor, Adam David
(86) International application number: PCT/US2006/011361
(87) International publication number: WO 2006/121514

(56) References cited:
- US-A- 5 579 678
- US-A1- 2003 126 993

## Description

The present invention relates generally to a beverage dispenser and more particularly relates to a beverage dispenser that provides coffee, espresso, tea, and other brewed beverages in a high speed and a high quality manner.

Several different types of beverage brewing systems are known in the art. For example, percolators and drip-type coffee makers have long been used to make regular or "American"-type coffee. Hot water is generally passed through a container of coffee grinds so as to brew the coffee. The coffee then drips into a pot or a cup. Tea also may be prepared in a similar manner. Likewise, pressure-based devices have long been used to make espresso-type beverages. Hot, pressurized water may be forced through the espresso grinds so as to brew the espresso. The espresso then may flow into the cup.

One of the drawbacks with these known systems may focus on their use in self-service or high volume restaurant or other types of retail outlets. For example, a high quality espresso beverage simply may take too long to brew with conventional equipment in a high volume restaurant. Similarly, the amount of time it may take to steep a cup of tea also may be too long. As a result, a customer may choose to go elsewhere for his or her brewed beverage.

Further, although coffee or tea may be made in sufficient quantity for a high volume restaurant or in any other type of establishment, the customer may prefer a beverage brewed mediately at that time and that location. Brewing smaller amounts of coffee or tea, however, has not always produced a quality beverage and, again, may take too much time as to be practical or economical for many commercial establishments.

What may be desired, therefore, is a beverage dispenser that can produce coffee, espresso, tea, and other types of brewed beverages in a high quality and high speed manner to individual consumers in individual servings. The device, however, preferably should be easy to use, easy to maintain, and be competitive in terms of cost

WO 2005/072575 discloses a beverage dispenser for brewing a beverage from a container of brewable material into a receptacle, comprising: a source of hot water; a nozzle for injecting the hot water under pressure into the container such that the hot water flows under pressure through the container and a brewed beverage flows into the receptacle.

The present invention provides a beverage dispenser for brewing a beverage from a container of brewable material into a receptacle, comprising: a hot water source, a nozzle for injecting hot water under pressure into the tain such that the hot water flows under pressure through the container and the brewed beverage flows into the receptacle, a source of a secondary fluid, a make-up pump positioned between the hot water source and said receptacle and a valve for flowing the hot water or the secondary fluid into the receptacle so as to combine the hot water or the secondary fluid with the brewed beverage.

The source of hot water may include a flow sensor and a pump in communication with a water source. The source of hot water may include a hot water reservoir and a heat exchanger. A valve may be positioned between the hot water reservoir and the nozzle.

The receptacle may include a collection funnel. A flow sensor may be positioned between the make-up pump and the receptacle. The beverage dispenser also may include a source of a further fluid so as to mix the further fluid with the brewed beverage and the hot water or cold water from the make-up pump.

The application further describes a method for brewing iced tea or coffee from a container of brewable material into a receptacle comprising injecting hot water under pressure into the container of brewable material, flowing the hot water under pressure through the container to brew the tea or coffee, flowing the tea or coffee into the receptacle, providing a make-up pump connected to a source of hot water and a source of cold water, selecting cold water from the make-up pump and flowing cold water into the receptacle, and mixing the cold water and the tea or coffee. Ice or a further fluid also may be added to the receptacle.

An embodiment of the invention will now be described by way of example only and with reference to the following drawings:-
Fig. 1 is a schematic view of a beverage dispenser system as described herein.
Fig. 2 is a perspective view of one embodiment of the beverage dispenser system as described herein.
Fig. 3 is a top plan view of the beverage dispenser system of Fig. 2.
Fig. 4 is a perspective view of the turret system of the beverage dispenser system of Fig. 2.
Fig. 5 is a perspective view of the injector assembly of the beverage dispenser system of Fig. 2 with the guide wheels and the return spring of the support plate shown in phantom lines.
Fig. 6 is a rear perspective view of the injector assembly of the beverage dispenser system of Fig. 2 with the idler wheel and the limit switch shown in a cut away view.
Fig. 7 is a cut away view of a beverage pod cartridge for use with the present invention.
Fig. 8 is a bottom plan view of the beverage pod of Fig. 7.
Fig. 9 is a plan view of the exterior of a vending machine that may be used with the beverage dispenser system of the present invention.
Fig. 10 is a side cross-sectional view of the pod cartridge and the injection head with the water flow path therethrough shown.

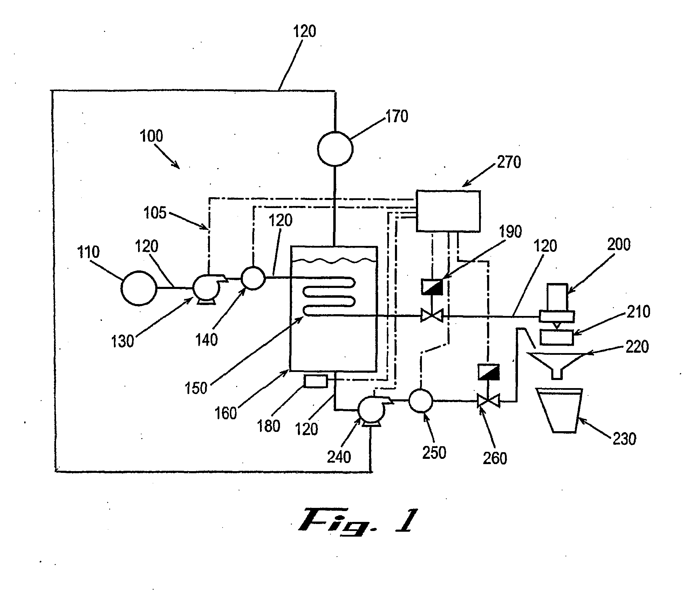

Referring now to the drawings, in which like numerals refer to like elements throughout the several views, Fig. 1 shows a schematic view of a beverage dispenser system 100 of the present invention.

The beverage dispenser system 100 may include a control system 105. The water control system 105 controls the flow of water within the beverage dispenser system 100 so as to produce a beverage. The water control system 105 may include a water source 110. The water source 110 may be a source of tap water or any other type of conventional water supply. The water may be at atmospheric pressure and preferably may be chilled to about 15 to about 24 degrees Celsius (about 60 to about 75 degrees Fahrenheit).

Water from the water source 110 may be transported throughout the beverage dispenser system 100 via one or more, water lines 120. The water lines 120 may be any type of conventional piping. The water lines 120 may be made out of copper, stainless steel, other types of metals, plastics, rubber, and other types of substantially non-corrosive types of materials. Preferably, copper or a similar material may be used due to the heat and the pressure involved herein. The size or the diameter of the water lines 120 may depend upon on the size and the anticipated volume of the overall beverage dispenser system 100. In general, the water lines 120 may be about 0.95 centimeters (about 3/8ths of an inch) or larger in inside diameter so as to provide the beverage dispenser system 100 with a throughput of about 1000 to 1500 milliliters (about 34 to about 50 ounces) of brewed beverages per minute.

Connected to one or more of the water lines 120 may be an extraction pump 130. The extraction pump 130 may pump and pressurize the water from the water source 110 so as to drive the water through the beverage dispenser system 100. The extraction pump 130 may be a conventional diaphragm pump, a centrifugal pump, a rotary vane pump, or a gear pump. Other types of conventional pumps also may be used. The speed of the pump 130 is preferably proportional to the flow rate therethrough. The pump 130 may have a flow rate of about 180 to 1500 milliliters per minute (about 6 to 50 ounces per minute) depending upon the size and volume of the overall beverage dispenser system 100. The pump 130 may be capable of different flow rates. The pump 130 may increase the pressure of the water from about atmospheric to about fourteen (14) kilograms per square centimeter (about zero (0) to about 200 pounds per square inch).

Positioned on or in communication with one of the water lines 120 downstream of the extraction pump 130 may be a flow sensor 140. The flow sensor 140 may measure the amount of water flowing through the water line 120 as pumped by the extraction pump 130. The flow sensor 140 may be of conventional design and may include a turbine or a paddle wheel type sensor.

Positioned on or in communication with one of the water lines 120 downstream of the flow sensor 140 may be a heat exchanger 150. The heat exchanger 150 may be a conventional coil-type or cross flow type heat exchanger and may be made out of copper, stainless steel, or similar types of materials. The heat exchanger 150 may be positioned within a hot water reservoir 160. The water within the heat exchanger 150 is heated as it passes through the hot water reservoir 160. The hot water reservoir 160 may be a conventional hot water container. The reservoir 160 may be made out of copper, stainless steel, brass or similar types of materials. Depending upon the overall size and capacity of the beverage dispenser system 100, the hot water reservoir 160 may hold about seven (7) to about nineteen (19) liters (about two (2) to about five (5) gallons) of water. The water within the hot water reservoir 160 may be heated by a conventional heat source 180. The heat source 180 may include a resistance device, a heat pump, or similar types of heating devices. The heat source 180 may heat the water within the hot water reservoir 160 to approximately 87 to about 102 degrees Celsius (about 180 to about 216 degrees Fahrenheit).

The hot water reservoir 160 also may be fed from a secondary water source 170. The secondary water source 170 may be identical to the water source 110 described above. The secondary water source 170 may be a source of tap water or a similar type of a conventional water supply. The secondary water source 170 may be connected to the hot water reservoir 160 by one or more water lines 120 as described above.

Positioned on or in communication with one or more of the water lines 120 downstream of the heat exchanger 150 and the hot water reservoir 160 may be a solenoid valve 190. The solenoid valve 190 may open and close the one or more water lines 120 downstream from the heat exchanger 150 and the hot water reservoir 160. The solenoid valve 190 may be of conventional design. Other types of valves also may be used herein.

Positioned on or in communication with one or more of the water lines 120 downstream of the solenoid valve 190 may be an injection nozzle 200. The injection nozzle 200 may direct a stream of the hot, high pressure water as the water exits the heat exchanger 150. Possible physical embodiments of the injection nozzle 200 will be described in more detail below.

Also as will be discussed in more detail below, the injection nozzle 200 may act in cooperation with a pod cartridge 210. The pod cartridge 210 may contain coffee, tea, espresso or other types of beverage grinds, leaves, or other materials. The pod cartridge 210 may be reusable or disposable. The injection nozzle 200 may inject or force the hot, high pressure water stream into the pod cartridge 210 so as to brew the coffee, tea, espresso, or other type of beverage.

Downstream of the pod cartridge 210 may be a collection funnel 220. The collection funnel 220 may be a conventionally shaped funnel structure. A cup 230, a pot, or other type of drinking vessel may be positioned underneath the collection funnel 220 so as to receive the brewed coffee, tea, espresso, or other type of brewed beverage. Alternatively, the cup 230 may be used without the collection funnel 220 or other type of structure.

A make-up water pump 240 may be in communication with the hot water reservoir 160 via one or more of the water lines 120. The make-up pump 240 may be identical or similar to the extraction pump 130 described above. Alternatively, the make-up pump 240 also may include a peristaltic, a gear type pump, or a similar type of device. The make-up pump 240 need not pressurize the make-up water flow. The pump 130 may have a flow rate of about 1000 to about 1250 milliliters per minute (about 33 to about 42 ounces per minute) depending upon the size and anticipated volume of the overall beverage dispenser system 100. The make-up pump 240 may be capable of different flow rates. The pump 240 may be capable of pressures of about 0.2 to 0.4 kilograms per square centimeter (about three (3) to about five (5) pounds per square inch).

Positioned on or in communication with one or more of the water lines 120 downstream of the make-up pump 240 may be a make-up water flow sensor 250. The make-up flow sensor 250 may be identical or similar to the flow sensor 140 described above.

Positioned on or in communication with one of the water lines 120 downstream of the flow indicator 250 may be a make-up water solenoid valve 260. The solenoid valve 260 may be identical or similar to the solenoid valve 190 described above. Instead of the solenoid valve 260 and the make-up pump 240, the flow of water downstream of the hot water reservoir 160 may be controlled by a gravity feed system. In other words, the water from the hot water reservoir 160 may be allowed to flow downstream once the solenoid valve 260 is opened.

One or more of the water lines 120 may connect the solenoid valve 260 and the collection funnel 220. Hot water from the hot water reservoir 160 may be mixed with the brewed coffee, tea, espresso, or other beverage from the injection nozzle 200 in the collection funnel 220 before being dispensed into the cup 230 so as to alter the strength or character of the beverage. The hot water also may be added directly to the cup 230 or other receptacle.

Alternatively, the make-up pump 240 may be in communication with the secondary water source 170 or a similar type of a conventional water supply via one or more of the water lines 120. The make-up pump 240 thus may be able to provide a supply of cold water to the collection funnel 220 and/or the cup 230 via the valve 260 and the make-up flow sensor 250. The use of the gravity fed system also may be used. Cold water from the secondary water source 170 or other sources may be mixed with, for example, the brewed tea so as to create a cold tea that may be suitable for iced tea. The cold water may be supplied to the collection funnel 220 or directly to the cup 230 or other receptacle. The cup 230 may include a supply of ice therein. A water chiller or other type of conventional heat transfer device may be used to chill the water if desired

Although the make-up pump 240 is shown as supplying both hot and cold water, multiple make-up pumps may be used. Further, the make-up pump 240 also may be in communication with a source of any type of secondary fluid. The secondary fluid may include milk, flavorings, additives, and other types of fluids.

An electronic control 270 may monitor and control the operation of the beverage dispenser system 100 as a whole and each of the components therein. The electronic control 270 may be a microcontroller such as a PIC16F876 controller sold by Microchip Technology of Chandler, Arizona or a similar type of device.

The electronic control 270 may control the operation of the extraction pump 130, the flow sensor 140, the heat source 180, the solenoid valve 190, the make-up water pump 240, the make-up flow sensor 250, the make-up solenoid valve 260, and other elements herein. Specifically, the electronic control 270 may monitor the amount of water dispensed by the extraction pump 130 via the flow sensor 140. When the appropriate amount of water has been dispensed, the solenoid valve 190 may shut one or more of the water lines 120. Likewise when a make-up water flow is required, the electronic control 270 may monitor the water flow as provided by the make-up pump 240 based upon the information provided by the make-up flow sensor 250 so as to turn the make-up solenoid valve 260 on and off. The electronic control 270 may activate the make-up pump 240 so as to provide a supply of hot water from the hot water reservoir 160 or a supply of cold water from the secondary water source 170 or other sources. The electronic control 270 also may monitor and vary the speed and flow rate of the pumps 130, 240. The electronic control 270 also may monitor and control the temperature of the water in the heat exchanger 150 and the water reservoir 160 as well as the heat source 180.

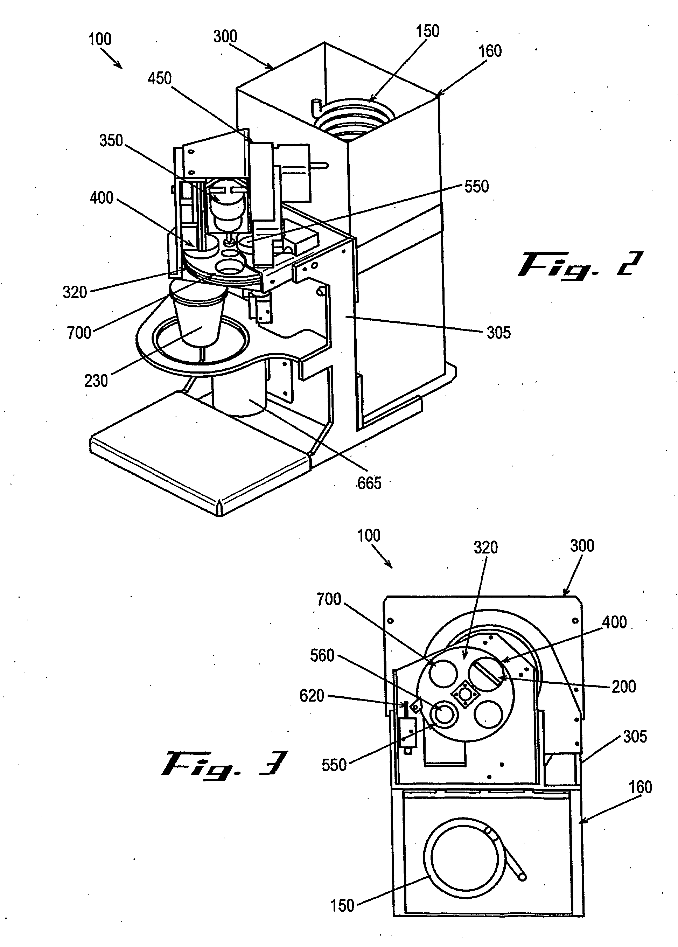

Figs. 2 and 3 show one application of the beverage dispenser system 100. In these figures, a pod brewing apparatus 300 is shown. The pod brewing apparatus 300 may include each of the elements as described above for the water control system 105, including the heat exchanger 150 positioned within the hot water reservoir 160 and the injection nozzle 200 as is shown. In this embodiment, the elements of the beverage dispenser system 100 as a whole are mounted onto a dispenser frame 305. The dispenser frame 305 may be made out of stainless steel, aluminum, other types of metals, or other types of substantially noncorrosive materials.

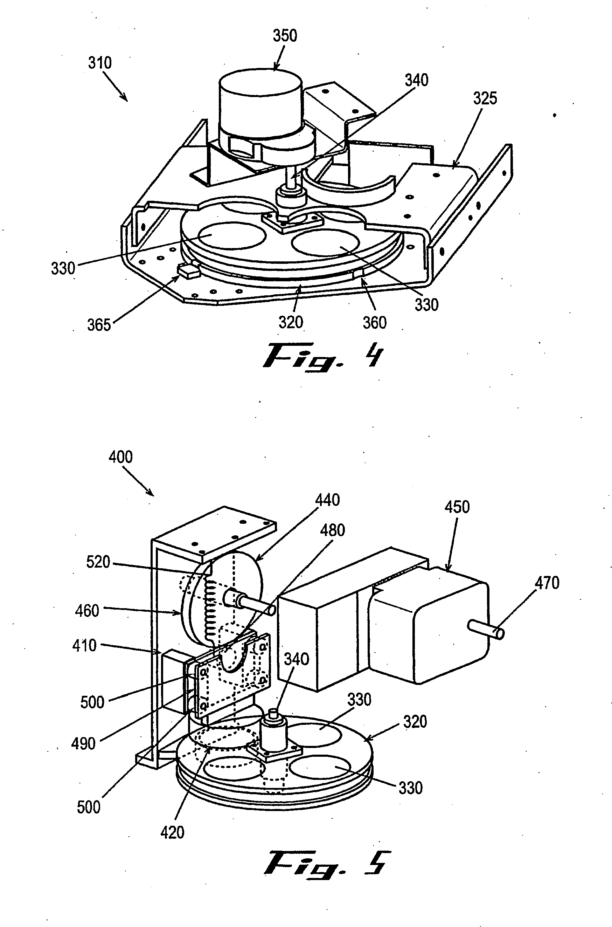

As was described above, the injection nozzle 200 may interact with the pod cartridges 210 so as to produce the desired beverage. The pod cartridges 210 may be positioned in the beverage dispenser system 100 within a turret assembly 310. The turret assembly 310 may be fixedly attached to the dispenser frame 305. As is shown in Fig. 4, the turret assembly 310 may include a turret plate 320 positioned within a turret frame 325. The turret frame 325 may be made out of stainless steel, aluminum, other types of conventional metals, or similar types of substantially noncorrosive materials. The turret plate 320 may be substantially circular. The turret plate 320 may include a number of pod apertures 330. The pod apertures 330 may be sized to accommodate the pod cartridges 210. The turret plate 320 may spin about a turret pin 340. A turret motor 350 may drive the turret assembly 310. The turret motor 350 may be a conventional AC motor or a similar type of device. The turret motor 350 may drive the turret assembly 310 at about six (6) to about thirty (30) rpm, with about twenty-five (25) rpm preferred.

The turret plate 320 also may have a number of detents 360 positioned about its periphery. The detents 360 may be positioned about each of the turret apertures 330. The detents 360 may cooperate with one or more limit switches 365 so as to control the rotation of the turret plate 320. Once the electronic control 270 activates the operation of the turret motor 350 so as to spin the turret plate 320, the rotation of the plate 320 may be stopped when the limit switch 360 encounters one of the detents 360.

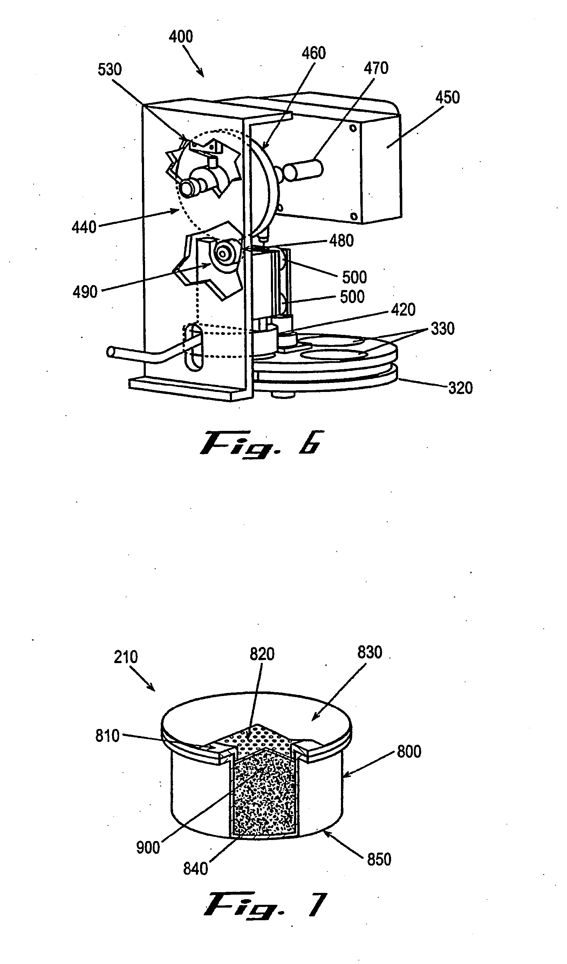

Positioned adjacent to the turret assembly 310 may be an injector assembly 400. The injector assembly 310 may be fixedly attached to the dispenser frame 305. As is shown in Figs. 5 and 6, the injector assembly 400 may include the injection nozzle 200 as described above. The injection nozzle 200 may have a diameter of about 0.3 to about 0.65 millimeters (about one-eight to about one-quarter inches). The injection nozzle 200 may be somewhat conical in shape so as to penetrate the pod cartridge 210. Alternatively, the nozzle 200 may be substantially flat if penetration is not required. The injector assembly 400 also may include an injector frame 410 extending above the turret assembly 310. The injector frame 410 may be made out of stainless steel, other types of metals, or similar types of substantially noncorrosive materials.

The injector assembly 400 may include an injector head 420. The injector head 420 may include the injection nozzle 200 as described above. The injector head 420 may be slightly larger in diameter than the pod cartridges 210. The injector head 420 also may be made out of stainless steel, plastics, or similar types of substantially noncorrosive materials. The injector head 420 may include a sealing ring 430 positioned about its lower periphery. The sealing ring 430 may be made out of rubber, silicone, or other types of elastic materials such that a substantially water tight seal may be formed between the injector head 420 and the pod cartridge 210. One or more of the water lines 120 may be connected to the injector nozzle 200 and the injector head 420. As is described above, the water lines 120 may connect the injection nozzle 200 with the heat exchanger 150 so as to provide hot, pressurized water to the pod cartridges 210.

The injector head 420 may be moveable in the substantially vertical plane via a cam system 440. (The terms "vertical" and "horizontal" are used as a frame of reference as opposed to absolute positions. The injector head 420 and the other elements described herein may operate in any orientation.) A cam system drive motor 450 may drive the cam system 440. The drive motor 450 may be a conventional AC motor similar to the turret motor 350 described above. The drive motor 450 also may be a shaded pole or a DC type motor. The drive motor 450 may rotate an eccentric cam 460 via a drive belt system 470. The drive motor 450 and the gear system 470 may rotate the eccentric cam 460 at about six (6) to about thirty (30) rpm, with about twenty-five (25) rpm preferred. The eccentric cam 460 may be shaped such that its lower position may have a radius of about 4.1 to about 4.8 centimeters (about 1.6 to 1.9 inches) while its upper position may have a radius of about 3.5 to 4.1 centimeters (about 1.3 to about 1.7 inches).

The eccentric cam 460 may cooperate with an idler wheel 480. The idler wheel 480 may be in communication with and mounted within a support plate 490. The support plate 490 may maneuver about the injector frame 410. The support plate 490 may be made out of stainless steel, other types of steel, plastics, or other materials. The support plate 490 may be fixedly attached to the injector head 420. The support plate 490 may have a number of guide wheels 500 positioned thereon such that the support plate 490 can move in the vertical direction within the injector frame 410. A return spring 520 also may be attached to the support plate and the injector frame 410. A limit switch 530 may be positioned about the cam 460 such that its rotation may not exceed a certain amount.

The injector head 420 thus may maneuver up and down in the vertical direction via the cam system 440. Specifically, the drive motor 450 may rotate the eccentric cam 460 via the gear system 470. As the eccentric cam 460 rotates with an ever-increasing radius, the idler wheel 480 pushes the support plate 490 downward such that the injector head 420 comes in contact with a pod cartridge 210. The eccentric cam 460 may lower the injector head 420 by about 6.4 to about 12.7 millimeters (about one-quarter to about one-half inches). Once the injector head 420 comes into contact with the pod cartridge 210, the eccentric cam 460 may continue to rotate and increases the pressure on the pod cartridge 210 until the cam 460 reaches the limit switch 530. The electronic control 270 then directs the drive motor 450 to hold the cam 460 in place for a predetermined amount of time. The electronic control 270 then reverses the cam system 440 such that the injector head 420 returns to its original position.

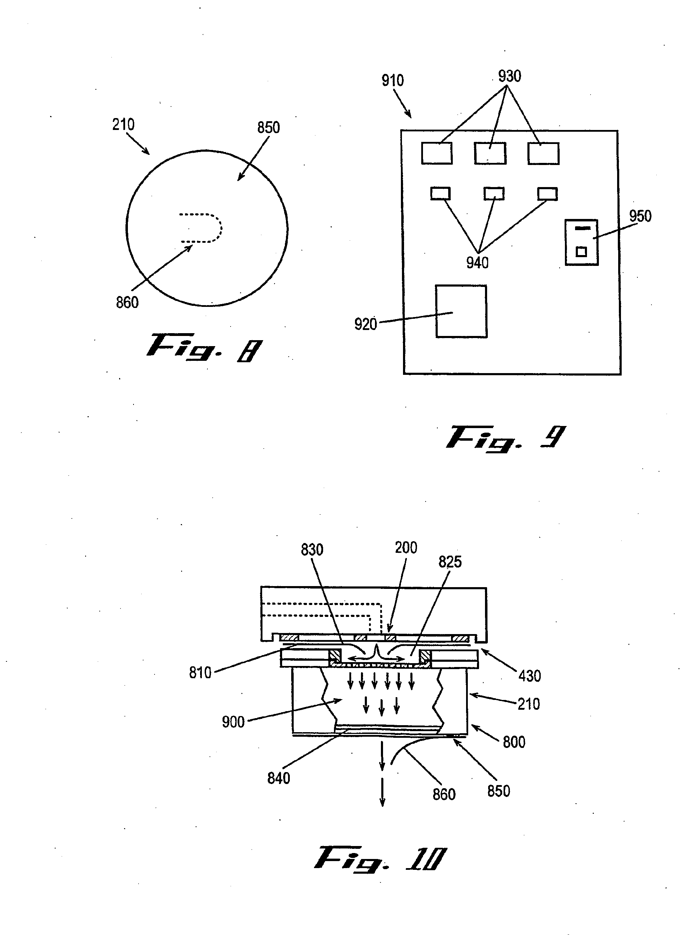

Figs. 7 and 8 show one embodiment of the pod cartridge 210. The pod cartridge 210 may include a cup 800. The cup 800 may be made out of a conventional thermoplastic such as polystyrene or polyethylene. Alternatively, metal such as stainless steel or similar types of substantially noncorrosive materials also may be used. The cup 800 may be substantially rigid. An insert 810 may enclose the top end of the cup 800. The insert 810 also may be made out of a thermoplastic or a similar material as is used for the cup 800. The insert 810 may have a plurality of apertures 820 therein. The insert 810 may be offset somewhat from the top of the cup 800. In other words, a gap 825 may exist over the insert 810. The top of the cup 800 may be enclosed with a seal 830. The seal 830 may be made out of a foil or a similar type of substantially airtight materials.

The bottom end of the cup 800 may include a filter layer 840. The filter layer 840 may be made out of a paper filter material or similar types of material. A bottom seal 850 may enclose the bottom end of the cup 800. The bottom seal 850 also may be made out of a foil or a similar type of material. The bottom seal 850 may have a scored area 860 positioned therein. The scored area 860 may detach from the bottom seal 850 upon the application of internal pressure.

The cup 800 may be filled with a brewing material 900. The brewing material 900 may be coffee, espresso, or similar types of coffee grinds; tealeaves; or any other type of beverage material that is desired to be brewed. If the cup 800 has a diameter of about 3.7 to four (4) centimeters (about 1.5 to 1.6 inches) and a depth of about 1.8 to about two (2) centimeters (about 0.7 to about 0.8 inches), about two (2) to about eight (8) grams of the brewing material 900 may be positioned within the cup 800. The seals 830, 850 may keep the beverage material 900 in a substantially airtight manner for freshness purposes.

Alternatively, the pod cartridge 210 may be as disclosed in commonly-owned U.S. Patent Application No. 10/908,350, entitled "Coffee and Tea Pod", filed simultaneously herewith. Further, the pod cartridge 210 may be as disclosed in commonly-owned U.S. Patent Application No. 10/604,445, entitled "Coffee and Tea Pod", filed on July 22, 2003, now allowed.

Fig. 9 shows one embodiment of the beverage dispenser system 100. In this case, a vending machine 910 is shown. The pod brewing apparatus 300, as described above, may function within the vending machine 910. The vending machine 910 may include a dispensing area 920. The dispensing area 920 allows the consumer to remove the cup 230 from the vending machine 910. The vending machine 910 also may have a number of selection indicators 930. The selection indicators may be push buttons or other types of signals by which the consumer can indicate a preference for coffee, tea, espresso, etc. The vending machine 910 also may have a number of addition indicators 940. The addition indicators 940 may allow the consumer to add a measure of, for example, milk, cream, sugar, or other types of additives and/or flavorings to the brewed beverage. The vending machine 910 also may have a payment device 950. The payment device 950 may be of conventional design.

In use, a number of the pod cartridges 210 may be filled with different types of grinds, leaves, or other types of the brewing material 900. In the case of a single serving sized espresso beverage of about thirty (30) milliliters, about six (6) to about eight (8) grams of espresso grinds may be placed in the pod cartridge 210. Likewise, about six (6) to about (8) grams of coffee grinds may be added to the pod cartridge 210 in order to produce about a 240 milliliter (about eight (8) ounce) cup of coffee. About three (3) to about five (5) grams of tealeaves may be added to the pod cartridge 210 in order to make about a 150 milliliter (about five (5) ounce) cup of tea.

In the case of iced tea, only about 29.6 milliliters (about one (1) ounce) of hot tea may be produced. In this case, about four (4) to about eight (8) grams of concentrated tealeaves may be used to produce about 29.6 milliliters (about one (1) ounce). An additional 355 milliliters (about twelve (12) ounces) of cold water then may be added as well as an amount of ice. Concentrated tealeaves are used given the amount of cold make-up water that may be added.

Once the pod cartridge 210 is in position within the aperture 330, the electronic control 270 activates the turret motor 350 so as to rotate the turret plate 320 towards the injector assembly 400. The turret motor 350 ceases operation when the limit switch 360 and the detent 370 on the turret plate 320 align.

Once the pod cartridge 210 is in position adjacent to the injector assembly 400, the electronic control 270 activates the drive motor 950 of the cam system 440. As is shown in Figs. 5 and 6, the drive motor 450 may activate the drive belt system 470 so as to rotate the eccentric cam 460. The eccentric cam 460 may rotate so as to lower the support plate 490 and the injector head 420. The injector head 420 may be lowered about 0.64 centimeters (about a quarter inch). The injector head 420 thus comes into contact with the pod cartridge 210. The injector head 420 may engage the pod cartridge 210 with a downward force of about 136 to 160 kilograms (about 300 to 350 pounds). The sealing ring 430 thus may form a substantially airtight and water tight seal about the pod cartridge 210. The downward motion of the injector head 420 and the operation of the drive motor 450 are stopped by the position of the limit switch 530.

As is shown in Fig. 10, the electronic control 270 then may activate the solenoid valve 190 so as to allow hot, high pressure water to flow from the heat exchanger 150 into the injection nozzle 200. The water may be at about 82 to about 102 degrees Celsius (about 180 to about 216 degrees Fahrenheit). The incoming water flow may be pressurized at about 11 to 14 kilograms per square centimeter (about 160 to 200 pounds per square inch). Because of the nature of the brewing material 900, the pressure of the water passing through the pod cartridge 210 may be about 1.4 to 14 kilograms per square centimeter (about 20 to about 200 pounds per square inch). The pressure of the water flowing through the pod cartridge 210 may vary with the nature of the brewing material 900.

The water passes through the injection nozzle 200 and spreads out over the insert 810 of the plastic cup 800 of the pod cartridge 210. The water then flows through the apertures 820 of the insert and passes into the brewing material 900. The pressure of the incoming water flow may cause the scored area 860 of the bottom seal 850 to open such that the brewed beverage passes out of the pod cartridge 210, into the collection funnel 220; and into the cup 230.

The electronic control 270 also may turn on the extraction pump 130 so as to draw in more water from the water source 110. The flow sensor 140 may monitor the amount of water flowing through the water lines 120. The water passes into the heat exchanger 150 positioned within the hot water reservoir 160. The water is then heated to the appropriate temperature. Once a sufficient amount of water has passed into the injector nozzle 200, the electronic control 270 may close the solenoid valve 190 and turn off the extraction pump 130.

In the case of an espresso beverage, the water may flow through the pod compartment 210 with a pressure of about 9.8 to 14 kilograms per square centimeter (about 140 to about 200 pounds per square inch). The water may take about ten (10) seconds or less to brew a cup 230 of espresso.

A cup 230 of coffee may be brewed in a somewhat different manner. First, the pod cartridge 210 with the brewing material 900 therein, in this case the coffee grinds, is brewed in the same manner as described above with respect to the espresso beverage. In the case or regular or "American" coffee, the water may flow through the pod cartridge 210 with a pressure of about 9.8 to 14 kilograms per square centimeter (about 140 to about 200 pounds per square inch), with a pressure of about 12.6 kilograms per square centimeter (about 180 pounds per square inch) preferred. Alternatively, with a coarser grind, the water may have a pressure of about only three (3) kilograms per square centimeter (about 40 pounds per square inch). The coffee may take about 10 to about 12 seconds or less to brew.

Second, an amount of makeup water may then be added to the beverage at the collection funnel 220 or the cup 230 before or while the beverage is being dispensed into the cup 230. Specifically, the electronic control 270 may open the make-up water solenoid valve 260 and activate the make-up water pump 240. An amount of water from the hot water reservoir 160 then flows into the collection funnel 220 or directly into the cup 230 as monitored by the flow sensor 250. An amount of cold water from the secondary water source 170 may be used instead to produce iced coffee in a manner similar to that described below with respect to iced tea. Alternatively, the make-up water pump 240 and the flow sensor 250 may be omitted such that the water flows from the hot water reservoir 160 under the force of gravity. Either way, once the appropriate amount of water has been added to the collection funnel 220 or the cup 230, the electronic control 270 again closes the solenoid valve 260. In the case of about a 240 milliliter (about eight (8) ounce) cup 230 of coffee, about 40 milliliters (about 1.4 ounces) will be brewed through the pod cartridge 210 and an additional 180 to 200 milliliters (about 6 to 6.6 ounces) of hot water will be added at the collection funnel 220 or the cup 230.

A cup 230 of tea may be brewed in a similar manner as the espresso beverage described above. Because of the nature of brewing material 900, in this case the tealeaves, the water flows through the pod cartridge 210 with only about three (3) kilograms per square centimeter (about 40 pounds per square inch) of pressure. The tea may take about ten (10) or less to brew.

In the case of iced tea, an amount of makeup water then may be added to the beverage at the collection funnel 220 or the cup 230 before or while the beverage is being dispensed into the cup 230. Specifically, the electronic control 270 may open the make-up water solenoid valve 260 and activate the make-up water pump 240. An amount of cold water from the secondary water source 170 or other supply then flows into the collection funnel 220 or directly into the cup 230 as monitored by the flow sensor 250. Alternatively, the make-up water pump 240 and the flow sensor 250 may be omitted such that the water flows from the secondary water source 170 or other supply under the force of gravity. Either way, once the appropriate amount of water has been added to the collection funnel 220 or the cup 230, the electronic control 270 again closes the solenoid valve 260.

In the case of iced tea, about 29.6 milliliters (about one (1) ounce) hot tea may be added to the cup 230. The tea may be at about 88 degrees Celsius (about 190 degrees Fahrenheit). The make-up pump 240 then may add about 177.5 milliliters (about six (6) ounces) to about 355 milliliters (about twelve (12) ounces) of cold water to the cup 230. The cold water may be at about zero (0) degrees Celsius (about 32 degrees Fahrenheit). The final beverage may be at about twelve (12) degrees Celsius (about 54 degrees Fahrenheit). Ice also may be added to the cup 230. Other types of fluids also may be used.

Iced coffee may be made in a similar manner. Further, cold milk also may be added in addition to the cold make up water. Other types of additives, sweeteners, and other ingredients also may be added.

Although the examples above have been in the context of a single serving cup 230, other types of receptacles may be used. For example, pitcher sized or other types of containers may be used herein.

Other types of brewing methods may be employed as is disclosed in commonly-owned U.S. Patent Application No. 10/908,350, and or U.S. Patent Application No. 10/604,445, described above. Other brewing methods also may be used.

## Claims

1. A beverage dispenser for brewing a beverage from a container of brewable material (210) into a receptacle (220), comprising:
a hot water source (160);
a nozzle (200) for injecting hot water under pressure into the container (210) such that the hot water flows under pressure through the container and the brewed beverage flows into the receptacle;
**characterised by**:
a source of a secondary fluid (170);
a make-up pump (240) positioned between said hot water source (160) and said receptacle (220) and positioned between said source of secondary fluid (170) and said receptacle (220);
a valve (260) for flowing hot water or the secondary fluid from the make-up pump into the receptacle (220) so as to combine the hot water or the secondary fluid with the brewed beverage.

2. The beverage dispenser of claim 1, wherein said source of hot water comprises a pump (130) in communication with a water source (110).

3. The beverage dispenser of claim 1 or 2, wherein said source of hot water comprises a flow sensor (140).

4. A beverage dispenser as claimed in claim 1, wherein: said source of hot water comprises a hot water reservoir (160); and
the source of secondary fluid is a source of cold water (170).

5. The beverage dispenser of any of claim 4, wherein said source of hot water comprises a heat exchanger (150).

6. The beverage dispenser of claim 5, wherein said source of hot water comprises a valve (190) positioned between said heat exchanger (150) and said nozzle (200).

7. The beverage dispenser of any of claims 2 to 6, wherein said receptacle (220) comprises a collection funnel.

8. The beverage dispenser of any of claims 2 to 7, wherein said source of cold water comprises a flow sensor (250), said flow sensor positioned between said make-up pump (240) and said receptacle (220).

9. The beverage dispenser of claim 2, further comprising a source of a further fluid so as to mix the further fluid with the brewed beverage and the hot water or cold water from the make-up pump (240).

10. A method for brewing iced tea or coffee from a container of brewable material (210) into a receptacle (230), comprising:
injecting hot water under pressure into the container of brewable material (210);
flowing the hot water under pressure through the container to brew the tea or coffee;
flowing the tea or coffee into the receptacle (220);
providing a make-up pump (240) connected to a source of hot water and a source of cold water (170);
selecting cold water from the make-up pump (240) and flowing the cold water into the receptacle (220); and
mixing the cold water and the tea or coffee.

11. The method of claim 10, further comprising adding a further fluid to the cold, water and the tea or coffee.

## Patentansprüche

1. Getränkespender zum Brühen eines Getränks von einem Behälter mit brühfähigem Material (210) in ein Aufnahmegefäß (220), mit:
einer Heißwasserquelle (160);
einer Düse (200), um heißes Wasser unter Druck in den Behälter (210) einzuleiten, so dass das heiße Wasser unter Druck durch den Behälter fließt und das gebrühte Getränk in das Aufnahmegefäß fließt;
**gekennzeichnet durch**:
eine Quelle für ein sekundäres Fluid (170);
eine Zusatzpumpe (240), die zwischen der Heißwasserquelle (160) und dem Aufnahmegefäß (220) positioniert ist und zwischen der Quelle für sekundäres Fluid (170) und dem Aufnahmegefäß (220) positioniert ist;
ein Ventil (260), um heißes Wasser oder das sekundäre Fluid von der Zusatzpumpe in das Aufnahmegefäß (220) fließen zu lassen, um so das heiße Wasser oder das sekundäre Fluid mit dem gebrühten Getränk zu kombinieren.

2. Getränkespender nach Anspruch 1, wobei die Quelle für heißes Wasser eine Pumpe (130) enthält, die mit einer Wasserquelle (110) kommuniziert.

3. Getränkespender nach Anspruch 1 oder 2, wobei die Quelle für heißes Wasser einen Durchflusssensor (140) enthält.

4. Getränkespender nach Anspruch 1, wobei:
die Quelle für heißes Wasser einen Heißwasser-Vorratsbehälter (160) enthält; und
die Quelle für sekundäres Fluid eine Quelle für kaltes Wasser (170) ist.

5. Getränkespender nach Anspruch 4, wobei die Quelle für heißes Wasser einen Wärmetauscher (150) enthält.

6. Getränkespender nach Anspruch 5, wobei die Quelle für heißes Wasser ein Ventil (190) enthält, das zwischen dem Wärmetauscher (150) und der Düse (200) positioniert ist.

7. Getränkespender nach einem der Ansprüche 2 bis 6, wobei das Aufnahmegefäß (220) einen Sammeleinlauf aufweist.

8. Getränkespender nach einem der Ansprüche 2 bis 7, wobei die Quelle für kaltes Wasser einen Durchflusssensor (250) enthält, wobei der Durchflusssensor zwischen der Zusatzpumpe (240) und dem Aufnahmegefäß (220) positioniert ist.

9. Getränkespender nach Anspruch 2, der ferner eine Quelle für ein weiteres Fluid enthält, um das weitere Fluid mit dem gebrühten Getränk und mit dem heißen Wasser oder dem kalten Wasser von der Zusatzpumpe (240) zu mischen.

10. Verfahren zum Brühen von geeistem Tee oder Kaffee von einem Behälter mit brühfähigem Material (210) in ein Aufnahmegefäß (230), das umfasst:
Einleiten von heißem Wasser unter Druck in den Behälter mit brühfähigem Material (210);
Bewirken, dass heißes Wasser unter Druck durch den Behälter fließt, um den Tee oder Kaffee zu brühen;
Bewirken, dass der Tee oder Kaffee in das Aufnahmegefäß (220) fließt;
Vorsehen einer Zusatzpumpe (240), die mit einer Quelle für heißes Wasser und mit einer Quelle für kaltes Wasser (170) verbunden ist;
Auswählen von kaltem Wasser von der Zusatzpumpe (240) und Bewirken, dass das kalte Wasser in das Aufnahmegefäß (220) fließt; und
Mischen des kalten Wassers mit dem Tee oder Kaffee.

11. Verfahren nach Anspruch 10, das ferner das Hinzufügen eines weiteren Fluids zu dem kalten Wasser und dem Tee oder Kaffee umfasst.

## Revendications

1. Distributeur de boisson destiné à faire percoler une boisson provenant d'un conteneur de matière pouvant être percolée (210) dans un récipient (220), comportant :
une source d'eau chaude (160) ;
une buse (200) pour injecter de l'eau chaude sous pression dans le conteneur (210) de telle sorte que l'eau chaude s'écoule sous pression à travers le conteneur et la boisson percolée s'écoule dans le récipient ;
**caractérisé par** :
une source de fluide secondaire (170) ;
une pompe de préparation (240) positionnée entre ladite source d'eau chaude (160) et ledit récipient (220), et positionnée entre ladite source de fluide secondaire (170) et ledit récipient (220) ;
une soupape (260) pour faire couler l'eau chaude ou le fluide secondaire à partir de la pompe de préparation dans le récipient (220) de manière à combiner l'eau chaude ou le fluide secondaire avec la boisson percolée.

2. Distributeur de boisson selon la revendication 1, dans lequel ladite source d'eau chaude comporte une pompe (130) en communication avec une source d'eau (110).

3. Distributeur de boisson selon la revendication 1 ou 2, dans lequel ladite source d'eau chaude comporte un capteur de débit (140).

4. Distributeur de boisson tel que revendiqué dans la revendication 1, dans lequel :
ladite source d'eau chaude comporte un réservoir d'eau chaude (160) ; et
la source de fluide secondaire est une source d'eau froide (170).

5. Distributeur de boisson selon la revendication 4, dans lequel ladite source d'eau chaude comporte un échangeur de chaleur (150).

6. Distributeur de boisson selon la revendication 5, dans lequel ladite source d'eau chaude comporte une soupape (190) positionnée entre ledit échangeur de chaleur (150) et ladite buse (200).

7. Distributeur de boisson selon l'une quelconque des revendications 2 à 6, dans lequel ledit récipient (220) comporte un entonnoir de collecte.

8. Distributeur de boisson selon l'une quelconque des revendications 2 à 7, dans lequel ladite source d'eau froide comporte un capteur de débit (250), ledit capteur de débit étant positionné entre ladite pompe de préparation (240) et ledit récipient (220).

9. Distributeur de boisson selon la revendication 2, comportant en outre une source d'un fluide supplémentaire de manière à mélanger le fluide supplémentaire avec la boisson percolée et l'eau chaude ou l'eau froide provenant de la pompe de préparation (240).

10. Procédé pour faire percoler du thé ou du café glacé à partir d'un conteneur de matière pouvant être percolée (210) dans un récipient (230), comportant les étapes consistant à :
injecter de l'eau chaude sous pression dans le conteneur de matière pouvant être percolée (210) ;
faire couler l'eau chaude sous pression à travers le conteneur pour faire percoler le thé ou le café ;
faire couler le thé ou le café dans le récipient (220) ;
fournir une pompe de préparation (240) raccordée à une source d'eau chaude et une source d'eau froide (170) ;
sélectionner l'eau froide provenant de la pompe de préparation (240) et faire couler l'eau froide dans le récipient (220) ; et
mélanger l'eau froide et le thé ou le café.

11. Procédé selon la revendication 10, comportant en outre l'ajout d'un fluide supplémentaire à l'eau froide et au thé ou café.
